(19) Europäisches Patentamt European Patent Office Office européen des brevets

(11) **EP 3 482 973 B1**

(12) **EUROPEAN PATENT SPECIFICATION**

(45) Date of publication and mention
of the grant of the patent:
**25.03.2020 Bulletin 2020/13**

(51) Int Cl.:
**B60C 1/00** *(2006.01)*        **C08J 3/00** *(2006.01)*
**C08J 3/22** *(2006.01)*        **C08L 7/00** *(2006.01)*
**C08L 9/00** *(2006.01)*        **C08K 3/04** *(2006.01)*

(21) Application number: **18201702.0**

(22) Date of filing: **22.10.2018**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.11.2017 JP 2017217611**

(43) Date of publication of application:
**15.05.2019 Bulletin 2019/20**

(73) Proprietor: **Sumitomo Rubber Industries, Ltd.
Kobe-shi, Hyogo 651-0072 (JP)**

(72) Inventors:
• **HIRO, Masataka
  Kobe-shi, Hyogo 651-0072 (JP)**
• **KASAI, Yuki
  Kobe-shi, Hyogo 651-0072 (JP)**

(74) Representative: **TBK
Bavariaring 4-6
80336 München (DE)**

(56) References cited:
**EP-A1- 3 176 000     EP-A1- 3 199 573**

**Description**

BACKGROUND OF THE INVENTION

Field of the Invention

The present invention relates to a pneumatic tire, and in particular, relates to a pneumatic tire that is excellent in abrasion resistance also in a high severity region.

Description of the Background Art

Due to extended life of tires and expansion of use areas of tires associated with globalization, tires are used in various road surface situations. Accordingly, tires are required to have higher severity resistance with respect to abrasion resistance and chipping resistance of tread rubber. Abrasion resistance at the time when the road surface state is in a high severity region is required to be further improved. In conventional truck tires and the like, measures against abrasion have been taken by blending carbon black having a reinforcement effect to a natural rubber/butadiene rubber blend.

A technology that uses predetermined carbon blacks is also disclosed (Japanese Laid-Open Patent Publication No. 2015-164985).

SUMMARY OF THE INVENTION

However, there is a limitation in improving, by blending carbon black, the abrasion resistance at the time when the road surface state is in a high severity region. Also, in the technology described in Japanese Laid-Open Patent Publication No. 2015-164985, the improvement of the abrasion resistance is not sufficient.

An object of the present invention is to provide a pneumatic tire that has further improved abrasion resistance at the time when the road surface state is in a high severity region.

As a result of study, the present inventors found that, in a high severity region, uniformity of the crosslinked structure is important for exertion of abrasion resistance. The present inventors conducted further study and have solved the problem by a pneumatic tire including a tread formed from a rubber composition containing: carbon black; and a rubber component that contains a predetermined amount of isoprene (IR)-based rubber and a predetermined amount of butadiene rubber (BR), wherein the variation of modulus measured with respect to 10 pieces obtained from portions on the equator of the ground-contact surface of the pneumatic tire is within a predetermined range.

That is, the present disclosure relates to [1] to [6] below.

[1] A pneumatic tire including a tread formed from a rubber composition containing: carbon black; and a rubber component that contains not less than 50% by mass and less than 100% by mass of an isoprene-based rubber, and greater than 0% by mass and not greater than 50% by mass of a butadiene rubber, wherein

a variation of modulus $(M300_{max}-M300_{min})\times100/M300_{max}$ measured with respect to 10 pieces obtained from portions on an equator of a ground-contact surface of the pneumatic tire is not greater than 20%, preferably not greater than 15%, and more preferably not greater than 12%.

[2] The pneumatic tire according to [1] above, wherein 50 to 90% by mass and preferably 60 to 80% by mass of the isoprene-based rubber, and 10 to 50% by mass and preferably 20 to 40% by mass of the butadiene rubber are contained in 100% by mass of the rubber component.

[3] The pneumatic tire according to [1] or [2] above, wherein an amount of the carbon black in the rubber composition per 100 parts by mass of the rubber component is not less than 40 parts by mass, preferably 45 to 65 parts by mass, more preferably 50 to 60 parts by mass, and further preferably 50 to 55 parts by mass.

[4] The pneumatic tire according to any one of [1] to [3] above, wherein the butadiene rubber is a butadiene rubber that has a cis-1,4 bond content of not less than 90% and preferably not less than 95%.

[5] The pneumatic tire according to any one of [1] to [4], wherein the rubber composition is obtained by using at least one of a vulcanizing agent and a vulcanization accelerator as a master batch with respect to the isoprene-based rubber.

[6] A method for producing a rubber composition containing:

carbon black; and
a rubber component that contains not less than 50% by mass and less than 100% by mass, preferably 50 to 90% by mass, and more preferably 60 to 80% by mass of an isoprene-based rubber, and greater than 0% by mass and not greater than 50% by mass, preferably 10 to 50% by mass, and more preferably 20 to 40% by mass of a butadiene rubber, wherein when a pneumatic tire is produced by using the rubber composition as a tread, the variation of modulus $(M300_{max}-M300_{min}) \times 100/M300_{max}$ measured with respect to 10 pieces obtained from portions on the equator of the ground-contact surface of the pneumatic tire is not greater than 20%, the method including:

a step of kneading a part of the isoprene-based rubber, the butadiene rubber, and the carbon black to obtain a kneaded product X;
a step of kneading a vulcanizing agent and a vulcanization accelerator into the obtained kneaded product X, wherein at least one of the vulcanizing agent and the vulcanization accelerator is added as a master batch with respect to the isoprene-based rubber, to obtain a kneaded product F; and
a step of vulcanizing the obtained kneaded product F.

According to the pneumatic tire, of the present invention, that includes a tread formed from a rubber composition containing: carbon black; and a rubber component that contains not less than 50% by mass and less than 100% by mass of an isoprene-based rubber, and greater than 0% by mass and not greater than 50% by mass of a butadiene rubber, wherein a variation of modulus $(M300_{max}-M300_{min}) \times 100/M300_{max}$ measured with respect to 10 pieces obtained from portions on an equator of a ground-contact surface of the pneumatic tire is not greater than 20%, it is possible to further improve abrasion resistance at the time when the road surface state is in a high severity region.

## DESCRIPTION OF THE PREFERRED EMBODIMENTS

A pneumatic tire of the present invention includes a tread formed from a rubber composition containing: carbon black; and a rubber component that contains not less than 50% by mass and less than 100% by mass of an isoprene-based rubber, and greater than 0% by mass and not greater than 50% by mass of a butadiene rubber. The variation of modulus $(M300_{max}-M300_{min}) \times 100/M300_{max}$ measured with respect to 10 pieces obtained from portions on the equator of the ground-contact surface of the pneumatic tire is not greater than 20%. Since the pneumatic tire is made as a pneumatic tire that includes the tread in which the variation of modulus is suppressed, the abrasion resistance can be improved.

The reason why such an abrasion resistance improving effect is obtained is not clear, but can be considered as follows. In the tread in which the variation of modulus is suppressed such that $(M300_{max}-M300_{min}) \times 100/M300_{max}$ measured with respect to 10 pieces obtained from portions on the equator of the ground-contact surface of the pneumatic tire is not greater than 20%, the crosslinked structure of the rubber has become uniform and the variation in the density of the crosslinked portions has been reduced. Accordingly, stress-concentrating portions in the rubber matrix can be reduced, and occurrence of fracture starting points and fracture growth can be suppressed. For improvement of abrasion resistance in a high severity region, the reduction of the stress-concentrating portions in the rubber matrix and the suppression of occurrence of fracture starting points and fracture growth are considered to be important, in addition to improvement of reinforcement effect by carbon black or the like. Therefore, it is considered that the improvement of abrasion resistance in a high severity region of the pneumatic tire has been realized as a result of: blending carbon black into the isoprene-based rubber and the butadiene rubber; and the pneumatic tire having the tread in which the variation of modulus is suppressed.

In the present specification, the variation of modulus (%)=$((M300_{max}-M300_{min}) \times 100/M300_{max})$ is a value obtained by: selecting 10 portions at substantially equal intervals on the equator of the ground-contact surface of the pneumatic tire to cut out rubber pieces having a size that allows sampling according to JIS K 6251; using the rubber pieces as sample pieces; and using the maximum value and the minimum value among the values of 300% modulus M300 measured with respect to the sample pieces, as $M300_{max}$ and $M300_{min}$, respectively. The variation of modulus is not greater than 20%, preferably not greater than 15%, and more preferably not greater than 12%. The variation of modulus being not greater than 20% is an evidence indicating that the rubber is finished in a uniform state, and accordingly, the rubber strength and abrasion resistance are improved. If the variation of modulus is made not greater than 15%, abrasion resistance tends to be further improved. The 300% modulus M300 is the stress at 300% elongation (M300) measured by performing a tensile test using a dumbbell No. 3 sample in 23°C atmosphere, in accordance with JIS K 6251 "Rubber, vulcanized or thermoplastics-Determination of tensile stress-strain properties".

The rubber component used in the rubber composition forming the tread contains not less than 50% by mass and less than 100% by mass of the isoprene-based rubber, and greater than 0% by mass and not greater than 50% by mass of the butadiene rubber (BR).

The isoprene-based rubber is not particularly limited, and isoprene-based rubbers that are generally used in the tire industry can be used. Examples of such isoprene-based rubbers include natural rubbers (NR) such as SIR20, RSS#3, and TSR20. The isoprene-based rubber used in the present invention includes reformed natural rubber, modified natural rubber, synthetic isoprene rubber, and modified synthetic isoprene rubber.

The amount of the isoprene-based rubber in 100% by mass of the rubber component used in the rubber composition forming the tread is not less than 50% by mass, and preferably not less than 60% by mass. When the amount of the isoprene-based rubber is less than 50% by mass, the rubber strength becomes insufficient, and the advantageous effects of the present invention cannot be achieved. The amount of the isoprene-based rubber in 100% by mass of the rubber component is less than 100% by mass, preferably not greater than 90% by mass, and more preferably not greater than 80% by mass. When the amount of the isoprene-based rubber is not greater than 90% by mass, the blending amount of BR can be ensured, abrasion resistance is further improved, and the TGC (tread groove crack) resistance tends to be favorable.

The BR is not particularly limited, and, for example, BRs that are generally used in the tire industry, such as BR having a cis-1,4 bond content of less than 50% (low-cis BR), BR having a cis-1,4 bond content of not less than 90% (high-cis BR), rare-earth element-based butadiene rubber synthesized using a rare-earth element-based catalyst (rare-earth element-based BR), BR containing syndiotactic polybutadiene crystal (SPB-containing BR), and modified BR (high-cis modified BR, low-cis modified BR), can be used. Among them, at least one type selected from the group consisting of high-cis BR, low-cis BR, and low-cis modified BR is preferably used, and high-cis BR is more preferably used.

Examples of high-cis BR include: BR730 and BR51 manufactured by JSR Corporation; BR1220 manufactured by Zeon Corporation; and BR130B, BR150B, and BR710 manufactured by Ube Industries, Ltd. Among the high-cis BRs, high-cis BR having a cis-1,4 bond content of not less than 95% is further preferable. These high-cis BRs may be used individually, or two or more of these high-cis BRs may be used in combination. By containing high-cis BR, low-temperature characteristics and abrasion resistance can be improved. Examples of low-cis BR include BR1250 manufactured by Zeon Corporation. These low-cis BRs may be used individually, or two or more of these low-cis BRs may be used in combination. The cis-1,4 bond content of the BR is a value calculated by infrared absorption spectrometry.

The amount of the BR in 100% by mass of the rubber component used in the rubber composition forming the tread is greater than 0% by mass, preferably not less than 10% by mass, and more preferably not less than 20% by mass. By setting the amount of the BR to be not less than 10% by mass, abrasion resistance tends to be favorable. In addition, the amount of the BR in 100% by mass of the rubber component is not greater than 50% by mass, and preferably not greater than 40% by mass. When the amount of the BR is greater than 50% by mass, a sufficient blending amount of the isoprene-based rubber cannot be ensured, the rubber strength becomes insufficient, and the advantageous effects of the present invention cannot be achieved.

The total amount of the isoprene-based rubber and the BR in 100% by mass of the rubber component is preferably not less than 70% by mass, more preferably not less than 80% by mass, and further preferably 100% by mass. When the total amount of the isoprene-based rubber and the BR is not less than 70% by mass, both abrasion resistance and low heat generation property can be achieved.

The rubber composition forming the tread contains carbon black. Accordingly, excellent abrasion resistance, chipping resistance, and cut resistance are achieved.

The carbon black is not particularly limited, and carbon black, such as GPF, FEF, HAF, ISAF, and SAF, which is generally used in the tire industry, can be used. For example, N110, N220, N330, and the like can be used, and these carbon blacks may be used individually, or two or more of these carbon blacks may be used in combination.

From the standpoint of weather resistance and reinforcement, the nitrogen adsorption specific surface area ($N_2SA$) of the carbon black is preferably not less than 50 $m^2$/g and more preferably not less than 80 $m^2$/g. From the standpoint of low fuel consumption performance, dispersibility, fracture properties, and durability, the $N_2SA$ of the carbon black is preferably not greater than 250 $m^2$/g and more preferably not greater than 220 $m^2$/g. The $N_2SA$ of the carbon black in the present specification is a value measured according to the A method of JIS K 6217.

The amount of the carbon black per 100 parts by mass of the rubber component is preferably not less than 40 parts by mass, more preferably not less than 45 parts by mass, and further preferably not less than 50 parts by mass. The amount of the carbon black being not less than 40 parts by mass is preferable since the rubber strength is sufficiently ensured. In addition, the amount of the carbon black per 100 parts by mass of the rubber component is preferably not greater than 65 parts by mass, more preferably not greater than 60 parts by mass, and further preferably not greater than 55 parts by mass. The amount of the carbon black being not greater than 65 parts by mass is preferable since low fuel consumption performance and processability are less likely to be impaired.

In addition to the above components, the rubber composition forming the tread can contain, as necessary, a rubber component other than the isoprene-based rubber and the BR, blending ingredients that are conventionally and generally used in the rubber industry, for example, a reinforcing filler other than carbon black, a silane coupling agent, a softener such as oil, adhesive resin, and liquid rubber, wax, zinc oxide, stearic acid, various antioxidants, a vulcanizing agent such as sulfur, various vulcanization accelerators, and the like.

Examples of other rubber components include styrene butadiene rubber (SBR), butadiene-isoprene rubber, and butyl rubber, and further include ethylene-propylene copolymer, and ethylene-octene copolymer. Two or more of these rubber components may be used in combination.

As a reinforcing filler other than carbon black, a reinforcing filler that is conventionally used in tire rubber compositions, such as silica, calcium carbonate, alumina, clay, and talc, can be contained.

The type of silica is not particularly limited, and for example, silica that is generally used in the tire industry, such as silica prepared by a dry process (anhydrous silica) and silica prepared by a wet process (hydrous silica), can be used. Among them, hydrous silica prepared by a wet process is preferable for the reason that it has a higher silanol group content. These types of silica may be used individually, or two or more of these types of silica may be used in combination.

The nitrogen adsorption specific surface area ($N_2SA$) of the silica is preferably not less than 20 $m^2/g$, more preferably not less than 30 $m^2/g$, and further preferably not less than 100 $m^2/g$. In addition, the $N_2SA$ of the silica is preferably not greater than 400 $m^2/g$, more preferably not greater than 300 $m^2/g$, and further preferably not greater than 280 $m^2/g$. When the $N_2SA$ of the silica is within the above range, low fuel consumption performance and processability tend to be achieved in a balanced manner. The $N_2SA$ of the silica in the present specification is a value measured by the BET method according to ASTM D3037-81.

In the case where silica is contained, the amount of the silica per 100 parts by mass of the rubber component is preferably not less than 5 parts by mass and more preferably not less than 7 parts by mass. In addition, the amount of the silica per 100 parts by mass of the rubber component is preferably not greater than 20 parts by mass and more preferably not greater than 15 parts by mass. When the amount of the silica is within the above range, more favorable low fuel consumption performance, processability, and abrasion resistance tend to be achieved.

In the case where silica is contained, a silane coupling agent is preferably used. Examples of the silane coupling agent include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3 -trimethoxysilylpropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropyl benzothiazole tetrasulfide, 3-triethoxysilylpropyl benzothiazolyl tetrasulfide, 3-triethoxysilylpropyl methacrylate monosulfide, 3-trimethoxysilylpropyl methacrylate monosulfide, bis(3-diethoxymethylsilylpropyl)tetrasulfide,3-mercaptopropyldimethoxymethylsilane, dimethoxymethylsilylpropyl-N,N-dimethylthiocarbamoyl tetrasulfide, and dimethoxymethylsilylpropylbenzothiazole tetrasulfide. These silane coupling agents may be used individually, or two or more of these silane coupling agents may be used in combination.

In the case where a silane coupling agent is contained, the amount of the silane coupling agent per 100 parts by mass of the silica is preferably not less than 1 part by mass and more preferably not less than 3 parts by mass. In addition, the amount of the silane coupling agent per 100 parts by mass of the silica is preferably not greater than 20 parts by mass and more preferably not greater than 10 parts by mass. When the amount of the silane coupling agent is within the above range, favorable processability, rubber strength, and abrasion resistance tend to be able to be ensured.

Examples of oil include process oils such as paraffinic process oils, aromatic process oils, and naphthenic process oils.

In the case where oil is contained, the amount of the oil per 100 parts by mass of the rubber component is preferably not less than 2 parts by mass and more preferably not less than 3 parts by mass. In addition, the amount of the oil per 100 parts by mass of the rubber component is preferably not greater than 5 parts by mass and more preferably not greater than 4 parts by mass. When the amount of the oil is within the above range, an effect due to the presence of the oil is sufficiently achieved, and favorable abrasion resistance can be achieved. In the present specification, the amount of the oil includes the amount of oil contained in oil-extended rubber.

Examples of a tackifying resin include resins that are commonly used in conventional tire rubber compositions, such as aromatic petroleum resins. Examples of aromatic petroleum resins include phenolic resins, coumarone-indene resins, terpene resins, styrene resins, acrylic resins, rosin resins, and dicyclopentadiene resins (DCPD resins). Examples of phenolic resins include Koresin (manufactured by BASF) and Tackirol (manufactured by Taoka Chemical Co., Ltd.). Examples of coumarone-indene resins include Kumaron (manufactured by NITTO CHEMICAL CO., LTD.), Escuron (manufactured by NIPPON STEEL & SUMIKIN CHEMICAL CO., LTD) and Neopolymer (manufactured by JXTG Nippon Oil & Energy Corporation). An example of styrene resins is Sylvatraxx 4401 (manufactured by Arizona Chemical Company). Examples of terpene resins include TR7125 (manufactured by Arizona Chemical Company) and TO125 (manufactured by Yasuhara Chemical Co., Ltd.).

The softening point of the tackifying resin is preferably not lower than 40°C and more preferably not lower than 60°C. By setting the softening point to be not lower than 40°C, sufficient grip performance tends to be achieved. In addition, the softening point is preferably not higher than 120°C and more preferably not higher than 100°C. By setting the softening point to be not higher than 120°C, sufficient grip performance tends to be achieved. The softening point of the resin in the present specification is a softening point that is measured with a ring and ball softening point measuring device according to JIS K 6220-1:2001 and that is a temperature at which a ball has descended.

The amount of the tackifying resin per 100 parts by mass of the rubber component is preferably not less than 3 parts by mass and more preferably not less than 5 parts by mass. In addition, the amount of the tackifying resin is preferably not greater than 30 parts by mass and more preferably not greater than 25 parts by mass. When the amount of the tackifying resin is within the above range, sufficient grip performance and abrasion resistance are achieved, and favorable low fuel consumption performance tends to be achieved.

Examples of a liquid diene-based polymer include liquid styrene butadiene copolymers (liquid SBR), liquid butadiene polymers (liquid BR), liquid isoprene polymers (liquid IR), and liquid styrene isoprene copolymers (liquid SIR). Among them, liquid SBR is preferable for the reason that desired abrasion resistance and stable steering stability during running are achieved in a balanced manner. The liquid diene-based polymer in the present specification is a diene-based polymer in liquid form at normal temperature (25°C).

From the standpoint of abrasion resistance, fracture properties, and durability, the weight average molecular weight (Mw) of the liquid diene-based polymer, which is measured by gel permeation chromatography (GPC) and obtained by polystyrene conversion, is preferably not less than $1.0 \times 10^3$ and more preferably not less than $3.0 \times 10^3$. In addition, from the standpoint of productivity, the Mw of the liquid diene-based polymer is preferably not greater than $2.0 \times 10^5$ and more preferably not greater than $1.5 \times 10^4$. The Mw of the liquid diene-based polymer in the present specification is a value that is measured by gel permeation chromatography (GPC) and obtained by polystyrene conversion.

In the case where a liquid diene-based polymer is contained, the amount of the liquid diene-based polymer per 100 parts by mass of the rubber component is preferably greater than 0 parts by mass and more preferably not less than 5 parts by mass. In addition, the amount of the liquid diene-based polymer is preferably not greater than 10 parts by mass and more preferably not greater than 8 parts by mass. When the amount of the liquid diene-based polymer is within the above range, processability is improved, and the advantageous effects of the present invention tend to be easily achieved.

The amount of the softener (the total amount of the adhesive resin, the oil, and the liquid diene-based polymer) per 100 parts by mass of the rubber component is preferably not less than 50 parts by mass, more preferably not less than 100 parts by mass, and further preferably not less than 120 parts by mass. In addition, the amount of the softener is preferably not greater than 250 parts by mass, more preferably not greater than 200 parts by mass, and further preferably not greater than 180 parts by mass. When the amount of the softener is within the above range, the advantageous effects of the present invention are more suitably achieved.

Examples of antioxidants include, but are not particularly limited to: naphthylamine-based antioxidants such as phenyl-$\alpha$-naphthylamine, phenyl-$\beta$-naphthylamine, and aldol-$\alpha$-trimethyl-1,2-naphthylamine; quinoline-based antioxidants such as a 2,2,4-trimethyl-1,2-dihydroquinoline copolymer and 6-ethoxy-2,2,4-trimethyl-1,2-dihydroquinoline; diphenylamine-based antioxidants such as p-isopropoxydiphenylamine, p-(p-toluenesulfonylamide)-diphenylamine, N,N-diphenylethylenediamine, and octylated diphenylamine; p-phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine; hydroquinone derivatives such as 2,5-di-(tert-amyl)hydroquinone and 2,5-di-tert-butylhydroquinone; phenol-based antioxidants (monophenol-based antioxidants such as 2,6-di-tert-butyl-4-methylphenol, 2,6-di-tert-butyl-4-ethylphenol, 2,6-di-tert-butylphenol, 1-oxy-3-methyl-4-isopropylbenzene, butylhydroxyanisole, 2,4-dimethyl-6-tert-butylphenol, n-octadecyl-3-(4'-hydroxy-3',5'-di-tert-butylphenyl)propionate, and styrenated phenol; bisphenol-based antioxidants such as 2,2'-methylene-bis-(4-methyl-6-tert-butylphenol), 2,2'-methylene-bis-(4-ethyl-6-tert-butylphenol), 4,4'-butylidene-bis-(3-methyl-6-tert-butylphenol), and 1,1'-bis-(4-hydroxyphenyl)-cyclohexane; trisphenol-based antioxidants; polyphenol-based antioxidants such as tetrakis-[methylene-3-(3',5'-di-tert-butyl-4'-hydroxyphenyl)propionate]methane); thiobisphenol-based antioxidants such as 4,4'-thiobis-(6-tert-butyl-3-methylphenol) and 2,2'-thiobis-(6-tert-butyl-4-methylphenol); benzimidazole-based antioxidants such as 2-mercaptomethylbenzimidazole; thiourea-based antioxidants such as tributyl thiourea; phosphorous acid-based antioxidants such as tris(nonylphenyl)phosphite; and organic thio acid-based antioxidants such as dilauryl thiodipropionate. These antioxidants may be used individually, or two or more of these antioxidants may be used in combination.

Among them, since the advantageous effects of the present invention are more suitably achieved, phenylenediamine-based antioxidants are preferably used. In the case where an antioxidant is contained in the rubber composition, the amount of the antioxidant (in the case where two or more antioxidants are contained, the total amount of these antioxidants) per 100 parts by mass of the rubber component is preferably 1 to 10 parts by mass and more preferably 1.5 to 5 parts by mass.

The rubber composition preferably contains zinc oxide. Accordingly, vulcanization is smoothly realized, and isotropy in stiffness and physical property is achieved. The zinc oxide is not particularly limited, and examples of the zinc oxide include zinc oxides conventionally used in the rubber industry (Ginrei R manufactured by Toho Zinc Co., Ltd., zinc oxide manufactured by Mitsui Mining & Smelting Co., Ltd., etc.), and a fine particulate zinc oxide having an average particle size of not greater than 200 nm (ZINCOX SUPER F-2 manufactured by HakusuiTech Co., Ltd., etc.). One of these zinc oxides may be used singly, or two or more of these zinc oxides may be used in combination.

When the zinc oxide is contained, the amount of the zinc oxide per 100 parts by mass of the rubber component is preferably not less than 1 part by mass and more preferably not less than 2 parts by mass. When the amount of the zinc oxide is not less than 1 part by mass, sufficient hardness (Hs) can be obtained. The amount of the zinc oxide is preferably not greater than 7 parts by mass and more preferably not greater than 5 parts by mass. By setting the amount of the zinc oxide to be not greater than 7 parts by mass, decrease of breaking strength tends to be able to be suppressed.

In addition, regarding stearic acid, wax, and the like, those that are conventionally used in the rubber industry can be used.

The vulcanizing agent is not particularly limited, and a vulcanizing agent that is generally used in the rubber industry can be used. A vulcanizing agent that contains sulfur atoms is preferable, and preferable examples thereof include powdery sulfur, precipitated sulfur, colloidal sulfur, surface-treated sulfur, and insoluble sulfur.

The vulcanization accelerator is not particularly limited, but examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based or aldehyde-ammonia-based vulcanization accelerators, imidazoline-based vulcanization accelerators, and xanthate-based vulcanization accelerators. Among them, sulfenamide-based vulcanization accelerators are preferable since the advantageous effects of the present invention are more suitably achieved.

Examples of sulfenamide-based vulcanization accelerators include CBS (N-cyclohexyl-2-benzothiazyl sulfenamide), TBBS (N-tert-butyl-2-benzothiazyl sulfenamide), N-oxyethylene-2-benzothiazyl sulfenamide, N,N'-diisopropyl-2-benzothiazyl sulfenamide, and N,N-dicyclohexyl-2-benzothiazyl sulfenamide. Examples of thiazole-based vulcanization accelerators include 2-mercaptobenzothiazole and dibenzothiazolyl disulfide. Examples of thiuram-based vulcanization accelerators include tetramethylthiuram monosulfide, tetramethylthiuram disulfide, and tetrabenzylthiuram disulfide (TBzTD). Examples of guanidine-based vulcanization accelerators include diphenylguanidine (DPG), diorthotolylguanidine, and orthotolylbiguanidine. These vulcanization accelerators may be used individually, or two or more of these vulcanization accelerators may be used in combination. Among them, CBS is preferable since the advantageous effects of the present invention are more suitably achieved.

In order to cause the variation of modulus $(M300_{max}-M300_{min}) \times 100/M300_{max}$ of the pneumatic tire to be not greater than 20%, it is considered that the crosslinked structure of the rubber composition forming the tread needs to be uniform. As a means for making the crosslinked structure of the rubber composition uniform, it is conceivable that the vulcanizing agent such as sulfur and the vulcanization accelerator are sufficiently dispersed in the rubber component, to make the crosslinking scaffolds uniform. For example, instead of adding the vulcanizing agent and the vulcanization accelerator as they are in the final step of kneading as commonly observed in a conventional method for producing a rubber composition, the vulcanizing agent and/or the vulcanization accelerator are/is dispersed in part of the rubber component before the final step, whereby the crosslinking scaffolds are made uniform, the crosslinked structure after the vulcanization is made uniform, and accordingly, the variation of modulus can be made to fall within the range according to the present invention.

Specifically, in the production of the rubber composition forming the tread, a method in which the vulcanizing agent and/or the vulcanization accelerator are/is added as a master batch with respect to the rubber component can be used. For example, at least a part of the isoprene-based rubber forming the rubber component, and the vulcanizing agent or the vulcanization accelerator are made into a master batch, and the master batch is kneaded in the final step into a kneaded product obtained by kneading the remaining rubber component and blending ingredients. Accordingly, a rubber composition in which the target crosslinking scaffolds are made uniform can be obtained. The master batch of the isoprene-based rubber and the vulcanizing agent or the vulcanization accelerator may be a wet master batch or a dry blend, and is not particularly limited. However, from the standpoint of dispersion uniformity, a wet master batch is preferable. As such a master batch, a known master batch can be used. For example, SANMIX available from SANSHIN CHEMICAL INDUSTRY CO., LTD. may be used.

The method for producing a wet master batch is not particularly limited, and a method known in the field of the rubber industry can be used.

As an example in which the vulcanizing agent master batch or the vulcanization accelerator master batch is not used, a method can be employed in which: chemicals are divided in accordance with the blending proportion of the isoprene-based rubber and the butadiene rubber; the divided chemicals corresponding to the isoprene-based rubber are kneaded; the obtained kneaded product is kneaded with the vulcanizing agent and/or the vulcanization accelerator; and then, this kneaded product and a kneaded product obtained by kneading the divided chemicals corresponding to the butadiene rubber are kneaded together, whereby a rubber composition in which the target crosslinking scaffolds are made uniform can be produced. It is understood that: either the vulcanizing agent or the vulcanization accelerator is used as a master batch; and the other of the vulcanizing agent and the vulcanization accelerator is kneaded into a kneaded product obtained by kneading the isoprene-based rubber and the chemicals in advance as described above, whereby a rubber composition in which the target crosslinking scaffolds are made uniform can be produced.

For each kneading in the production of the rubber composition, a known kneading machine can be used. For example, a device, such as a Banbury mixer, a kneader, and an open roll, which applies mechanical shearing force to a material and performs kneading and mixing, can be used.

The pneumatic tire of the present invention can be produced by: a forming step of forming an unvulcanized tire by extruding and processing the rubber composition, in which the crosslinking scaffolds are made as uniform as possible as described above, so as to have the shape of a tire tread in an unvulcanized state, attaching the resultant rubber composition with other tire members on a tire forming machine, and shaping these members by a normal method; and a vulcanizing step of heating and pressurizing the unvulcanized tire in a vulcanizing machine. The vulcanization temperature is, for example, not lower than 120°C and not higher than 200°C.

The pneumatic tire of the present invention is excellent particularly in abrasion resistance since the rubber composition, in which the crosslinking scaffolds are made as uniform as possible as described above, is used for the tire tread to cause the variation of modulus $(M300_{max}-M300_{min})\times100/M300_{max}$ of the obtained tire to be not greater than 20%. In the case where the tread is composed of two layers, that is, a cap tread and a base tread, the above-described rubber composition needs to be used at least as the cap tread.

The pneumatic tire of the present invention can be used as, for example, a tire for a passenger car, a tire for a truck or a bus, a tire for a motorcycle, and a high performance tire. In the present specification, the high performance tire is a tire that is excellent particularly in grip performance, and conceptually includes a tire, for racing, used in a racing vehicle.

[Example]

The present invention will be described below based on examples. However, the present invention is not limited only to the examples.

Various chemicals used in Examples and a Comparative Example are collectively described below.

NR: TSR20

BR1: BR150B (cis-1,4- content: 97%) manufactured by Ube Industries, Ltd.

BR2: JSR BR730 (cis-1,4- content: 95%) manufactured by JSR Corporation

Carbon black: DIABLACK I (N220) ($N_2SA$: 114 $m^2$/g, average primary particle diameter: 22 nm) manufactured by Mitsubishi Chemical Corporation

Wax: Sunnoc N (paraffinic) manufactured by Ouchi Shinko Chemical Industrial Co., Ltd.

Zinc oxide: Zinc Oxide No. 1 manufactured by Mitsui Mining & Smelting Co., Ltd.

Stearic acid: bead stearic acid, Tsubaki, manufactured by NOF Corporation

Antioxidant: Nocrac 6C manufactured by Ouchi Shinko Chemical Industrial Co., Ltd.

Sulfur: Powdery sulfur manufactured by Tsurumi Chemical Industry Co., Ltd.

Vulcanization accelerator: SOXINOL CZ (N-cyclohexyl-2-benzothiazolesulfenamide) manufactured by Sumitomo Chemical Co., Ltd.

Vulcanizing agent master batch (vulcanizing agent MB): vulcanizing agent master batch (NR/sulfur =20/80 (mass ratio)) produced in Production Example 1

Vulcanization accelerator master batch (vulcanization accelerator MB): vulcanization accelerator master batch (NR/vulcanization accelerator=20/80(mass ratio)) produced in Production Example 2

Production Example 1: production of vulcanizing agent MB

<Preparation of NR latex and vulcanizing agent slurry solution>

NR was diluted with water to have a concentration of 30%, thereby preparing an NR latex. A 10% slurry solution was prepared by using sulfur as a vulcanizing agent and adding water in a high speed homogenizer manufactured by IKA.

<Production of vulcanizing agent MB>

0.2 kg of the above-obtained NR latex and 0.8 kg of the above-obtained vulcanizing agent slurry solution were loaded into a solidification tank (LR-1 manufactured by MIZUHO INDUSTRIAL CO., LTD.), and mixing was performed at 5000 rpm for 30 minutes, to solidify the mixture. Then, while mixing was further continued at 5000 rpm, the pulverizer blade in the solidification tank was rotated at 5000 rpm for 30 minutes, to pulverize the solidified product. After the pulverization of the solidified product, and while stirring was continued at 1000 rpm, formic acid was added until pH of the solidification solution became 4. After pH of the solidification solution became 4, and while stirring was continued, the pulverizer blade in the solidification tank was rotated at 3000 rpm for 10 minutes, to pulverize the solidified product. The obtained solidified product was loaded into a twin-screw extruder, dehydrated, and dried, to produce a wet master batch. As the twin-screw extruder, an HTM twin-screw extruder manufactured by CTE co., Ltd., was used, and the operation condition was 200 rpm and a temperature of 120°C.

Production Example 2: production of vulcanization accelerator MB

A vulcanization accelerator MB was produced in the same manner as in Production Example 1 except that a vulcanization accelerator was used instead of sulfur as the vulcanizing agent.

Examples 1 to 9 and Comparative Example 1

In accordance with the blending contents shown in Table 1, chemicals other than sulfur, the vulcanization accelerator, the vulcanizing agent MB, and the vulcanization accelerator MB were kneaded with a Banbury mixer under a condition of 150°C for 5 minutes, to obtain a kneaded product. Sulfur or the vulcanizing agent MB and the vulcanization accelerator or the vulcanization accelerator MB were added to the obtained kneaded product in accordance with the blending contents shown in Table 1, and the resultant mixture was kneaded with an open roll under a condition of 80°C for 5 minutes to obtain an unvulcanized rubber composition. The obtained unvulcanized rubber composition was formed into a tread shape and attached together with other tire members to produce an unvulcanized tire, and the unvulcanized tire was vulcanized at 150°C for 30 minutes, to produce a tire (tire size: 275/80R225).

Examples 10 and 11

A tire was produced in the same manner as in Example 1 except that the vulcanizing agent MB and the vulcanization accelerator MB were put together and the mixture was used after having been kneaded with an open roll under a condition of 80°C for minutes.

Examples 12 to 15

In accordance with the blending contents shown in Table 2, various chemicals shown in step X1 were kneaded under a condition of 150°C for 5 minutes with a 1.7 L-Banbury mixer, to obtain a kneaded product X1. In accordance with the blending contents separately shown in Table 2, the kneaded product X1 and various chemicals shown in step X2 were kneaded under a condition of 150°C for 5 minutes with a 1.7L-Banbury mixer, to obtain a kneaded product X2. In accordance with the blending contents shown in Table 2, the kneaded product X2 was kneaded, together with other chemicals if other chemicals were listed in step F, under a condition of 80°C for 5 minutes with an open roll, to obtain an unvulcanized rubber composition. A tire was produced in the same manner as in Example 1, using the obtained unvulcanized rubber composition.

With respect to the tire obtained in each Example and Comparative Example, an abrasion resistance test and evaluation of variation of modulus were performed through the test described below. The results are shown in Tables 1 and 2.

<Abrasion resistance evaluation in high severity region>

The above test tires were mounted to a 2-D vehicle made in Japan having an engine displacement of 12000 cc, and the vehicle was caused to actually run on a general road. The groove depth of the tire tread rubber after the vehicle had run 100 thousand kilometers was measured (16 mm in the case of new tire), and was expressed in terms of an index, with the index of the groove depth of Comparative Example 1 defined as 100. The greater the index is, the more excellent the abrasion resistance is.

<Modulus and variation thereof>

The tread rubber was cut out by selecting 10 portions at substantially equal intervals on the equator of the ground-contact surface of the test tire above to be used as test pieces. With respect to the tensile property of the obtained test pieces, in accordance with JIS K 6251, a tensile test was performed in 23°C atmosphere using a desk-top precision universal testing machine (AGS-X) manufactured by Shimadzu Corporation, and the 300% modulus was measured. The average value of the 10 pieces was obtained as modulus (Pa) and shown in Tables 1 and 2. Among the 10 pieces, the highest value was defined as $M300_{max}$ and the lowest value was defined as $M300_{min}$, and the variation of modulus was calculated by the following formula (1).

$$\text{Variation of modulus (\%)} = (M300_{max} - M300_{min}) \times 100 / M300_{max} \cdots (1)$$

The smaller the variation of modulus is, the more uniform the crosslinked structure is.

[Table 1]

Table 1

| Blending amount (parts by mass) | | Example | | | | | | | | | | | Comparative Example |
| --- | --- | --- | --- | --- | --- | --- | --- | --- | --- | --- | --- | --- | --- |
| | | 1 | 2 | 3 | 4 | 5 | 6 | 7 | 8 | 9 | 10 | 11 | 1 |
| Blending amount (parts by mass) | NR | 79.15 | 69.15 | 59.15 | 49.15 | 79.15 | 49.15 | 79.75 | 79.4 | 84.15 | 79.15 | 79.15 | 80 |
| | BR1 | 20 | 30 | 40 | 50 | - | - | 20 | 20 | 15 | 20 | - | 20 |
| | BR2 | - | - | - | - | 20 | 50 | - | - | - | - | 20 | - |
| | carbon black | 52 | 52 | 52 | 52 | 52 | 52 | 52 | 52 | 52 | 52 | 52 | 52 |
| | wax | 1 | 1 | 1 | 1 | 1 | 1 | 1 | 1 | 1 | 1 | 1 | 1 |
| | antioxidant | 2 | 2 | 2 | 2 | 2 | 2 | 2 | 2 | 2 | 2 | 2 | 2 |
| | stearic acid | 3 | 3 | 3 | 3 | 3 | 3 | 3 | 3 | 3 | 3 | 3 | 3 |
| | zinc oxide | 4 | 4 | 4 | 4 | 4 | 4 | 4 | 4 | 4 | 4 | 4 | 4 |
| | sulfur | - | - | - | - | - | - | - | 1 | - | - | - | 1 |
| | vulcanization accelerator | - | - | - | - | - | - | 1.4 | - | - | - | - | 1.4 |
| | sulfur MB | 1.25 | 1.25 | 1.25 | 1.25 | 1.25 | 1.25 | 1.25 | - | 1.25 | 1.25 | 1.25 | - |
| | vulcanization accelerator MB | 2 | 2 | 2 | 2 | 2 | 2 | - | 2 | 2 | 2 | 2 | - |
| Evaluation | abrasion resistance index | 110 | 115 | 119 | 113 | 115 | 117 | 103 | 104 | 104 | 112 | 118 | 100 |
| | modulus (MPa) | 16 | 15 | 14 | 15 | 16 | 15 | 16 | 16 | 16 | 15 | 16 | 16 |
| | variation of modulus (%) | 15 | 12 | 12 | 13 | 12 | 12 | 20 | 18 | 17 | 13 | 12 | 23 |

[Table 2]

Table 2

| Blending amount (parts by mass) | | Example | | | |
|---|---|---|---|---|---|
| | | 12 | 13 | 14 | 15 |
| Blending amount (parts by mass) | step X1 NR carbon black step X2 | 80 22 | 80 22 | 79.4 22 | 79.15 22 |
| | kneaded product X1 BR carbon black wax antioxidant stearic acid zinc oxide | 102 20 30 1 2 3 4 | 102 20 30 1 2 3 4 | 102 20 30 1 2 3 4 | 102 20 30 1 2 3 4 |
| | vulcanization accelerator vulcanization accelerator MB | - - | 1.4 - | - 2 | - 2 |
| | step F kneaded product X2 sulfur sulfur MB vulcanization accelerator | 162 1 - 1.4 | 163.4 1 - - | 164 1 - - | 164 - 1.25 - |
| Evaluation | abrasion resistance index modulus (MPa) variation of modulus (%) | 105 16 19 | 109 16 16 | 115 15 12 | 120 14 9 |

The results shown in Tables 1 and 2 reveal that when the amount of the isoprene-based rubber and the amount of the butadiene rubber are within predetermined ranges and the variation of modulus is smaller, abrasion resistance becomes excellent, and the abrasion resistance enhancing effect due to carbon black can be further improved.

Provided is a pneumatic tire having further improved abrasion resistance at the time when the road surface state is in a high severity region.

A pneumatic tire including a tread formed from a rubber composition containing: carbon black; and a rubber component that contains not less than 50% by mass and less than 100% by mass of an isoprene-based rubber, and greater than 0% by mass and not greater than 50% by mass of a butadiene rubber, wherein a variation of modulus $(M300_{max}-M300_{min})\times100/M300_{max}$ measured with respect to 10 pieces obtained from portions on an equator of a ground-contact surface of the pneumatic tire is not greater than 20%.

## Claims

1. A pneumatic tire including a tread formed from a rubber composition containing:

carbon black; and
a rubber component that contains not less than 50% by mass and less than 100% by mass of an isoprene-based rubber, and greater than 0% by mass and not greater than 50% by mass of a butadiene rubber, wherein a variation of modulus $(M300_{max}-M300_{min})\times100/M300_{max}$ measured with respect to 10 pieces obtained from portions on an equator of a ground-contact surface of the pneumatic tire, according to the method as described in the description, is not greater than 20%.

**2.** The pneumatic tire according to claim 1, wherein
50 to 80% by mass of the isoprene-based rubber, and 20 to 50% by mass of the butadiene rubber are contained in 100% by mass of the rubber component.

**3.** The pneumatic tire according to claim 1 or 2, wherein
an amount of the carbon black in the rubber composition per 100 parts by mass of the rubber component is not less than 40 parts by mass.

**4.** The pneumatic tire according to any one of claims 1 to 3, wherein
the butadiene rubber is a butadiene rubber that has a cis-1,4 bond content of not less than 90%.

**5.** The pneumatic tire according to any one of claims 1 to 4, wherein
the rubber composition is obtained by using at least one of a vulcanizing agent and a vulcanization accelerator, as a master batch with respect to the isoprene-based rubber.

**6.** A method for producing a rubber composition containing:

carbon black; and
a rubber component that contains not less than 50% by mass and less than 100% by mass of an isoprene-based rubber, and greater than 0% by mass and not greater than 50% by mass of a butadiene rubber, wherein when a pneumatic tire is produced by using the rubber composition as a tread, a variation of modulus $(M300_{max}\text{-}M300_{min})\times 100/M300_{max}$ measured with respect to 10 pieces obtained from portions on an equator of a ground-contact surface of the pneumatic tire, according to the method as described in the description, is not greater than 20%,
the method comprising:

a step of kneading a part of the isoprene-based rubber, the butadiene rubber, and the carbon black to obtain a kneaded product X;
a step of kneading a vulcanizing agent and a vulcanization accelerator into the obtained kneaded product X, wherein at least one of the vulcanizing agent and the vulcanization accelerator is added as a master batch with respect to the isoprene-based rubber, to obtain a kneaded product F; and
a step of vulcanizing the obtained kneaded product F.


**Patentansprüche**

**1.** Luftreifen, der eine aus einer Kautschukzusammensetzung gebildete Lauffläche beinhaltet, die enthält:

Carbon Black; und
eine Kautschukkomponente, die nicht weniger als 50 Massen-% und weniger als 100 Massen-% eines Kautschuks auf Isoprenbasis und mehr als 0 Massen-% und nicht mehr als 50 Massen-% eines Butadienkautschuks enthält, wobei
eine Variation des Moduls $(M300_{max}\text{-}M300_{min})\times 100/M300_{max}$, gemessen in Bezug auf 10 Stücke, die aus Abschnitten auf einem Äquator einer Bodenkontaktfläche des Luftreifens erhalten wurden, gemäß dem in der Beschreibung beschriebenen Verfahren, nicht größer als 20% ist.

**2.** Luftreifen nach Anspruch 1, wobei
50 bis 80 Massen-% des Kautschuks auf Isoprenbasis und 20 bis 50 Massen-% des Butadienkautschuks in 100 Massen-% der Kautschukkomponente enthalten sind.

**3.** Der Luftreifen nach Anspruch 1 oder 2, wobei
eine Menge des Carbon Blacks in der Kautschukzusammensetzung pro 100 Masseteile der Kautschukkomponente nicht weniger als 40 Masseteile beträgt.

**4.** Der Luftreifen nach einem der Ansprüche 1 bis 3, wobei
der Butadienkautschuk ein Butadienkautschuk mit einem cis-1,4-Bindungsgehalt von nicht weniger als 90% ist.

**5.** Luftreifen nach einem der Ansprüche 1 bis 4, wobei

die Kautschukzusammensetzung durch Verwendung von zumindest einem von einem Vulkanisationsmittel und einem Vulkanisationsbeschleuniger als Masterbatch in Bezug auf den Kautschuk auf Isoprenbasis erhalten wird.

6. Verfahren zur Herstellung einer Kautschukzusammensetzung, die enthält:

Carbon Black; und

eine Kautschukkomponente, die nicht weniger als 50 Massen-% und weniger als 100 Massen-% eines Kautschuks auf Isoprenbasis und mehr als 0 Massen-% und nicht mehr als 50 Massen-% eines Butadienkautschuks enthält, wobei

wenn ein Luftreifen unter Verwendung der Kautschukzusammensetzung als Lauffläche hergestellt wird, eine Variation des Moduls $(M300_{max}-M300_{min}) \times 100/M300_{max}$, gemessen in Bezug auf 10 Stücke, die aus Abschnitten auf einem Äquator einer Bodenkontaktfläche des Luftreifens erhalten werden, nicht größer als 20% ist, wobei das Verfahren umfasst:

einen Schritt des Knetens eines Teils des Kautschuks auf Isoprenbasis, des Butadienkautschuks und des Carbon Blacks, um ein Knetprodukt X zu erhalten;

einen Schritt des Knetens eines Vulkanisationsmittels und eines Vulkanisationsbeschleunigers in das erhaltene Knetprodukt X, wobei zumindest eines von dem Vulkanisationsmittel und dem Vulkanisationsbeschleuniger als Masterbatch in Bezug auf den Kautschuk auf Isoprenbasis zugegeben wird, um ein Knetprodukt F zu erhalten; und

ein Schritt der Vulkanisierung des erhaltenen Knetproduktes F.

## Revendications

1. Pneumatique comprenant une bande de roulement formée à partir d'une composition en caoutchouc, contenant :

du noir de carbone ; et

un composant de caoutchouc qui contient plus de 50 % en poids et moins de 100 % en poids d'un caoutchouc à base d'isoprène, et plus de 0 % en poids et moins de 50 % en poids d'un caoutchouc de butadiène, dans lequel une variation du module $(M300_{max}-M300_{min}) \times 100/M300_{max}$ mesuré par rapport à 10 pièces obtenues à partir de portions sur un équateur d'une surface du pneumatique en contact avec le sol, d'après la méthode telle que décrite dans la description, n'est pas supérieure à 20 %.

2. Pneumatique selon la revendication 1, dans lequel 50 à 80 % en poids du caoutchouc à base d'isoprène et 20 à 50 % en poids du caoutchouc de butadiène sont présents dans 100 % en poids du composant de caoutchouc.

3. Pneumatique selon la revendication 1 ou 2, dans lequel une quantité de noir de carbone dans la composition en caoutchouc pour 100 parties en poids du composant en caoutchouc est supérieure à 40 parties en poids.

4. Pneumatique selon l'une quelconque des revendications 1 à 3, dans lequel le caoutchouc de butadiène est un caoutchouc de butadiène qui a une teneur en liaison cis-1,4 supérieure à 90 %.

5. Pneumatique selon l'une quelconque des revendications 1 à 4, dans lequel la composition en caoutchouc est obtenue en utilisant au moins un élément parmi un agent de vulcanisation et un accélérateur de vulcanisation, comme lot maître par rapport au caoutchouc à base d'isoprène.

6. Méthode de production d'une composition en caoutchouc contenant :

du noir de carbone ; et

un composant de caoutchouc qui contient plus de 50 % en poids et moins de 100 % en poids d'un caoutchouc à base d'isoprène, et plus de 0 % en poids et moins de 50 % en poids d'un caoutchouc de butadiène, dans lequel quand un pneumatique est produit en utilisant la composition en caoutchouc comme bande de roulement, une variation du module $(M300_{max}-M300_{min}) \times 100/M300_{max}$ mesuré par rapport à 10 pièces obtenues à partir de portions sur un équateur d'une surface du pneumatique en contact avec le sol, d'après la méthode telle que décrite dans la description, n'est pas supérieure à 20 %, ladite méthode comprenant :

une étape de pétrissage d'une partie du caoutchouc à base d'isoprène, du caoutchouc de butadiène et du noir de carbone pour obtenir un produit X pétri ;

une étape de pétrissage d'un agent de vulcanisation et d'un accélérateur de vulcanisation dans le produit X pétri obtenu, dans laquelle au moins un élément parmi l'agent de vulcanisation et l'accélérateur de vulcanisation est ajouté en tant que lot maître par rapport au caoutchouc à base d'isoprène, pour obtenir un produit F pétri ; et

une étape de vulcanisation du produit F pétri obtenu.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015164985 A